(19)

**Europäisches Patentamt**

**European Patent Office**

**Office européen des brevets**

(11) **EP 4 575 901 A1**

(12) **EUROPEAN PATENT APPLICATION**

(43) Date of publication:
**25.06.2025 Bulletin 2025/26**

(21) Application number: **24210577.3**

(22) Date of filing: **04.11.2024**

(51) International Patent Classification (IPC):
**G06N 3/0475** *(2023.01)* **G06N 20/20** *(2019.01)*

(52) Cooperative Patent Classification (CPC):
**G06N 20/20; G06N 3/0475;** G01R 31/3865

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.11.2023 KR 20230154660**

(71) Applicants:
• **Samsung SDI Co., Ltd.
Yongin-si, Gyeonggi-do 17084 (KR)**
• **Seoul National University R&DB Foundation
Seoul 08826 (KR)**

(72) Inventors:
• **Yu, Jeemin
Yongin-si, Gyeonggi-do 17084 (KR)**
• **Yoon, Sungroh
Seoul 08826 (KR)**
• **Jang, Jaehee
Seoul 08826 (KR)**
• **Yoo, Seungryong
Seoul 08826 (KR)**
• **Lee, Jaehyoun
Yongin-si, Gyeonggi-do 17084 (KR)**
• **Han, Jee Hoon
Yongin-si, Gyeonggi-do 17084 (KR)**

(74) Representative: **Gulde & Partner
Patent- und Rechtsanwaltskanzlei mbB
Berliner Freiheit 2
10785 Berlin (DE)**

(54) **SYSTEM AND METHOD FOR DESIGNING PROCESS FACTOR**

(57)     A system for designing a process factor according to the present disclosure includes: a first generation device configured to generate a plurality of first process factors using a first generative model that estimates a decision boundary of a quality prediction model and generates the process factor based on the estimated decision boundary; a second generation device configured to generate a plurality of second process factors using a deep learning-based second generative model; and a determination device configured to determine a third generative model among the first generative model and the second generative model according to a result of evaluating the plurality of first process factors and the plurality of second process factors using the quality prediction model, and automatically generate at least one process factor applied to a production process using the third generative model. The quality prediction model is an artificial neural network model that receives a process factor of the production process as input data and predicts quality data based on the input data.

FIG. 1

**Description**

**FIELD**

The present disclosure relates to a system and a method for designing a process factor, and more particularly, to a system and a method for designing a process factor for designing a process factor applied to a production process of a battery.

**BACKGROUND**

A secondary battery that may be repeatedly charged and discharged differs from a primary battery that provides only irreversible conversion of chemical energy to electrical energy. A low-capacity secondary battery is generally used as a power supply for a small electronic device such as a mobile phone, a laptop computer, or a camcorder, and a high-capacity secondary battery is generally used as a power supply for a hybrid vehicle or the like.

**SUMMARY**

A problem to be solved through the present disclosure is to provide a system and a method for designing a process factor capable of designing an optimized process factor for achieving a target quality in a production process of a battery and reducing a cost and a time required for designing the process factor.

A system for designing a process factor according to embodiments for solving the above problem includes: a first generation device configured to generate a plurality of first process factors using a first generative model capable of estimating a decision boundary of a quality prediction model and generating the process factor based on the estimated decision boundary; a second generation device configured to generate a plurality of second process factors using a deep learning-based second generative model; and a determination device configured to determine a third generative model among the first generative model and the second generative model and automatically generate at least one process factor applied to a production process using the third generative model. The quality prediction model is an artificial neural network model that receives a process factor of the production process as input data and predicts quality data based on the input data and wherein the third generative model is a result of an evaluation of the plurality of first process factors and the plurality of second process factors using the quality prediction model.

The system may further include a quality prediction model construction device configured to construct the quality prediction model by learning the artificial neural network model using a plurality of third process factors and a plurality of quality data collected from the production process as learning data.

The first generation device may be further configured to estimate the decision boundary by applying an adversarial attack on the quality prediction model.

The second generation device may be further configured to use the quality prediction model as a discriminative model of the second generative model to learn the second generative model.

The determination device may be further configured to input the plurality of first process factors and the plurality of second process factors as the input data of the quality prediction model, analyze output data output from the quality prediction model to calculate a first and a second ratio, and determine the optimal generative model based on a comparison result of the first ratio and the second ratio, wherein: the first ratio is a ratio of process factors satisfying a target quality among the plurality of first process factors, and the second ratio is a ratio of process factors satisfying a target quality among the plurality of second process factors.

The production process may be a production process of a battery, the at least one process factor applied to the production process may be a factor representing a design condition in the production process of the battery and may comprises at least one of a charging voltage, a charging capacity, a charging time, a charging cell temperature, a discharging voltage, a discharging current, a discharging capacity, a discharging cell temperature, and an electrolyte weight, and the quality data may indicate whether a target quality for at least one quality factor indicating a quality of a battery is achieved.

A method for designing a process factor of a system according to embodiments includes: generating a plurality of first process factors using a first generative model that estimates a decision boundary of a quality prediction model and generates the process factor based on the estimated decision boundary; generating a plurality of second process factors using a deep learning-based second generative model; determining a third generative model among the first generative model and the second generative model according to an evaluation of the plurality of first process factors and the plurality of second process factors using the quality prediction model; and automatically designing at least one process factor applied to a production process using the third generative model. The quality prediction model is an artificial neural network model that receives the process factor applied to the production process as input data and predicts quality data based on the input data.

The method may further include constructing the quality prediction model by learning the artificial neural network model using a plurality of third process factors and a plurality of quality data collected from the production process as learning data.

The generating of the plurality of first process factors may include estimating the decision boundary by applying an adversarial attack on the quality prediction model.

The method may further include using the quality prediction model as a discriminative model of the second generative model to learn the second generative model.

The determining of the third generative model may include: inputting the plurality of first process factors and the plurality of second process factors as the input data of the quality prediction model; analyzing output data output from the quality prediction model to calculate a first ratio and a second ratio; and determining the optimal generative model based on a comparison result of the first ratio and the second ratio, wherein: the first ratio is a ratio of process factors satisfying a target quality among the plurality of first process factors, and the second ratio is a ratio of process factors satisfying a target quality among the plurality of second process factors.

Another aspect of the present disclosure relates to a method for manufacturing a system for designing a process factor. In some embodiments, the method comprises providing a first generation device that generates a plurality of first process factors using a first generative model, estimates a decision boundary of a quality prediction model, and generates the process factor based on the estimated decision boundary; providing a second generation device that generates a plurality of second process factors using a deep learning-based second generative model; providing a determination device that determines a third generative model among the first generative model and the second generative model and automatically generates at least one process factor applied to a production process using the third generative model, wherein: the quality prediction model is an artificial neural network model that receives a process factor of the production process as input data and predicts quality data based on the input data, and wherein the third generative model is a result of an evaluation of the plurality of first process factors and the plurality of second process factors using the quality prediction model.

In some embodiments, the method further comprises providing a quality prediction model construction device that constructs the quality prediction model by learning the artificial neural network model using a plurality of third process factors and a plurality of quality data collected from the production process as learning data.

In some embodiments, the first generation device estimates the decision boundary by applying an adversarial attack on the quality prediction model.

In some embodiments, the second generation device is further uses the quality prediction model as a discriminative model of the second generative model to learn the second generative model.

In some embodiments, the determination device inputs the plurality of first process factors and the plurality of second process factors as the input data of the quality prediction model.

In some embodiments, the determination device analyzes output data output from the quality prediction model to calculate a first ratio and a second ratio.

In some embodiments, the first ratio is a ratio of process factors satisfying a target quality among the plurality of first process factors, and the second ratio is a ratio of process factors satisfying a target quality among the plurality of second process factors.

In some embodiments, the at least one process factor applied to the production process at least one of a charging voltage, a charging capacity, a charging time, a charging cell temperature, a discharging voltage, a discharging current, a discharging capacity, a discharging cell temperature, and an electrolyte weight.

The production process may be a production process of a battery, the at least one process factor applied to the production process may be a factor representing a design condition in the production process of the battery and may include at least one of a charging voltage, a charging capacity, a charging time, a charging cell temperature, a discharging voltage, a discharging current, a discharging capacity, a discharging cell temperature, and an electrolyte weight, and the quality data may indicate whether a target quality for at least one quality factor indicating a quality of a battery is achieved.

According to the present disclosure, an optimized process factor for achieving a quality target in a production process of a battery may be designed, and a cost and a time required for designing the process factor may be reduced.

**BRIEF DESCRIPTION OF THE DRAWINGS**

FIG. 1 schematically shows a system for designing a process factor in a production process of a battery according to some embodiments.

FIG. 2 shows an example in which an adversarial sample is generated by an adversarial attack, according to some embodiments.

FIG. 3 schematically shows a second process factor generation device of the system for designing the process factor according to some embodiments.

FIG. 4 schematically shows a method for designing the process factor according to some embodiments.

## DETAILED DESCRIPTION

In general, the secondary battery includes an electrode assembly including a positive electrode, a negative electrode, and a separator interposed between the positive electrode and the negative electrode, a case accommodating the electrode assembly, and an electrode terminal electrically connected to the electrode assembly. An electrolyte solution is injected into the case to enable charging and discharging of the battery through an electrochemical reaction between the positive electrode, the negative electrode, and the electrolyte solution. A shape of the case such as a cylindrical or rectangular shape varies depending on a use of the battery.

Typically, a large amount of costs is invested in a production process of the battery, so a process optimization technology for increasing a quality of the battery and reducing a production cost is relatively important. Technologies for designing a process factor of the production process of the battery have recently been developed to design a new type of the battery or promote process homogenization between production bases.

Design of Experiments (DOE) is mainly used as a method for designing the process factor of the production process of the battery. However, DOE-based battery process optimization generally consumes a lot of time and cost, and the process homogenization between the bases in the DOE-based battery process optimization is very difficult. Embodiments of the present disclosure will be described in detail with reference to the accompanying drawings. Operation effects of the embodiments of the present disclosure, and a realization method thereof will be described with reference to the accompanying drawings. In the drawings, same reference numerals indicate same constituent elements, and no repeated descriptions thereof will be provided. The described embodiments may be modified in various different ways, all without departing from the spirit or scope of the present disclosure. The embodiments are provided as examples so that the present disclosure may be thorough and complete, and will sufficiently supply aspects and characteristics of the present disclosure to a person skilled in the art.

Hence, for the purpose of complete understanding on the aspects and the characteristics of the present disclosure, processes, factors, and skills that may not be needed by a person of ordinary skill in the art may not be described. In the drawings, relative sizes of elements, layers, and regions may be exaggerated for clarity.

In the present specification, the term "and/or" includes any and all combinations of the associated listed items. When the embodiments of the present disclosure are described, the use of "can" or "may" signifies at least one embodiment of the present disclosure. In the following description of the embodiments of the present disclosure, a singular term may include a plural form unless stated in another way.

In the present specification, terms including ordinal numbers such as first, second, and third will be used only to describe various constituent elements, and are not to be interpreted as limiting these constituent elements. The terms are only used to differentiate one constituent element from other constituent elements. For example, a first constituent element may be termed a second constituent element, and similarly, a second constituent element may be termed a first constituent element, without departing from the scope of the present disclosure. An expression such as "at least one" precedes a list of constituent elements to modify an entire list of constituent elements and not to modify an individual constituent element of the list.

In the present specification, the terms "substantially," "about," and similar terms are used as terms of approximation and not as terms of degree, and are intended to account for the inherent variations in measured or calculated values that may be recognized by those of ordinary skill in the art. Further, if the term "substantially" is used in combination with a feature that may be expressed using a numeric value, the term "substantially" denotes a range of +/- 5% of a value centered on the value.

It will be understood that when a constituent element or layer is referred to as being "on," "connected to," or "coupled to" another constituent element or layer, it may be directly on, connected to, or coupled to the other constituent element or layer, or one or more intervening constituent elements or layers may be present. It will also be understood that when a constituent element or layer is referred to as being "between" two constituent elements or layers, it may be the only constituent element or layer between the two constituent elements or layers, or one or more intervening constituent elements or layers may also be present.

Electrically connecting two constituent elements may include directly connecting two constituent elements, and connecting the same with another constituent element therebetween. The other constituent element may include a switch, a resistor, a capacitor, or the like. When the embodiments are described, an expression of connection signifies electrical connection when an expression of direct connection is not provided.

Hereinafter, a system and a method for designing a process factor in a production process of a battery according to embodiments will be described in detail with reference to the necessary drawings.

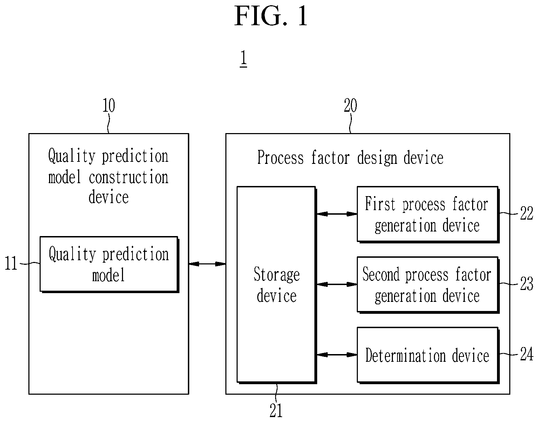

FIG. 1 schematically shows the system for designing the process factor in the production process of the battery according to the embodiments.

Referring to FIG. 1, the process factor design system 1 according to some embodiments may include a quality prediction model construction device 10 and a process factor design device 20.

The quality prediction model construction device 10 may construct a quality prediction model 11 for predicting a quality of the battery produced in the battery production process using a deep learning method. The quality prediction model 11 may be an artificial neural network model that is an artificial intelligence-based prediction model that receives one or more process factors used in the battery production process as input data and outputs quality data of the battery predicted to be obtained when the process factor is applied to the battery production process as output data.

Learning data used to generate the quality prediction model 11 may include process factors actually applied to the battery production process and quality data of the battery obtained corresponding thereto. The process factor of the battery production process used for generating the quality prediction model 11 may be a factor indicating a design condition in the battery production process, and may include a charging voltage, a charging capacity, a charging time, a charging cell temperature, a discharging voltage, a discharging current, a discharging capacity, a discharging cell temperature, an electrolyte weight, or the like. The quality data used to learn the quality prediction model 11 may be values indicating whether target quality of factors representing the quality of the battery such as an open circuit voltage (OCV), an internal resistance (IR), a cell capacity, a cell thickness, and the like are achieved. For example, the quality prediction model 11 may correspond to a binary classification model for predicting and classifying a class to which input data belongs among an upper class satisfying the target quality and a lower class not satisfying the target quality. In some embodiments, a type of the process factor or types of the quality data used for learning the quality prediction model 11 may be changed according to the battery production process.

The process factor design device 20 may select an advantageous process factor design method among a process factor design method using the quality prediction model 11 generated by the quality prediction model construction device 10 and a decision boundary method. The process factor design device 20 may also select an advantageous process factor design method among a process factor design method using the quality prediction model 11 and a deep learning-based generative model, and may provide process factors generated through the selected process factor design method. To this end, the process factor design device 20 may include a storage device 21, a first process factor generation device 22, a second process factor generation device 23, and a determination device 24.

The storage device 21 may include at least one memory, and may store various data and information processed in the process factor design device 20.

The storage device 21 may store the quality prediction model 11 generated by the quality prediction model construction device 10. The storage device 21 may store a program for operating the first process factor generation device 22, the second process factor generation device 23, and the determination device 24. The storage device 21 may store original data used to generate a process factor in the first process factor generation device 22. The storage device 21 may store process factors generated in the first process factor generation device 22. The storage device 21 may store a deep learning-based generative model used in the second process factor generation device 23. The storage device 21 may store original data used to generate a process factor in the second process factor generation device 23. The storage device 21 may store process factors generated in the second process factor generation device 23. The original data used for generating the process factor in the first process factor generation device 22 or the second process factor generation device 23 may include process factors collected in an actual battery manufacturing process.

The first process factor generation device 22 may use a decision boundary-based generative model to generate at least one process factor that may satisfy a target quality of the battery in the production process of the battery. The decision boundary-based generative model may estimate a decision boundary of the quality prediction model 11, and may generate process factors based on the estimated decision boundary.

The decision boundary of the quality prediction model 11 may be estimated using an adversarial attack for deceiving the quality prediction model 11. The quality prediction model 11 that is the binary classification model may be a model that learns the decision boundary capable of determining a quality of the battery on distribution of input data. The decision boundary of the quality prediction model 11 may have a complex structure so that it is relatively difficult to mathematically define the decision boundary of the quality prediction model. Thus, the decision boundary may be estimated through an indirect method such as the adversarial attack.

The adversarial attack may be a method used to estimate the decision boundary in a deep learning-based prediction model that is the quality prediction model 11. The adversarial attack may be a method that intentionally distorts a prediction result of the prediction model by adding a noise to the input data that is relatively difficult for a human to perceive. In the adversarial attack method, a sample in which the predicted result is different by adding the noise to the input data may be referred to as an adversarial sample. Equation 1 below shows an example of a method of obtaining the adversarial sample ($x_{adv}$) by adding the noise ($\delta$) to original data ($x$).

[Equation 1]

$$x_{adv} = x + \max_{\delta, \|\delta\| \leq \in} L(\theta, x + \delta, y)$$

In Equation 1 above, *x* and *y* may represent the original data and a target label (or a target class) before the adversarial attack is committed, respectively. $\delta$ may represent the noise added to the original data, and $\varepsilon$ may represent a limited category of the noise. $\theta$ may be a parameter of the prediction model, and *L* may be a loss function and may be an indicator of how much prediction of the prediction model deviates from the given target label.

Referring to Equation 1 above, the adversarial attack may be said to be a process of generating the adversarial sample ($x_{adv}$) by optimizing the noise ($\delta$) so that the adversarial attack induces misclassification of the predictive model while limiting the noise ($\delta$) to a size that is difficult for a human to recognize ($\|\delta\| \leq \varepsilon$).

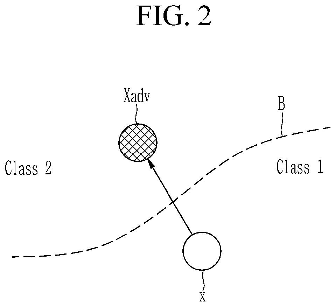

FIG. 2 shows an example in which the adversarial sample is generated by the adversarial attack.

Referring to FIG. 2, in the prediction model that is the binary classification model, a sample (x) that is input data may be mapped to a representation space, and may be classified into a specific class by the decision boundary B in the representation space. From a perspective of the prediction model, the adversarial attack may be said to be a process of generating the adversarial sample ($x_{adv}$) by applying the noise ($\delta$) so that the sample (x) that is original data crosses the decision boundary B within the representation space of the prediction model to move from a region of its own class (Class 1) to a region of another class (Class 2).

The first process factor generation device 22 may acquire a new process factor ($x_{adv}$) from an existing process factor (x) that is the original data by performing the adversarial attack on the quality prediction model 11. For example, the first process factor generation device 22 may generate the new process factor ($x_{adv}$) belonging to an upper class of the battery quality from the existing process factor (x) predicted to belong to a lower class of the battery quality by performing the adversarial attack on the quality prediction model 11. In some embodiments, a fact that the first process factor generation device 22 generates the new process factor ($x_{adv}$) may mean generating a process factor with the same type as that of the existing process factor (x) but with a changed design value. For example, the first process factor generation device 22 may perform the adversarial attack on the quality prediction model 11 to obtain charge voltage data with a value of B from charge voltage data with a value of A as a new process factor.

As a result, the first process factor generation device 22 may estimate the decision boundary by applying the adversarial attack on the quality prediction model 11, and may generate the process factor that satisfies the target quality based on the estimated decision boundary.

The second process factor generation device 23 may be independent of the first process factor generation device 22, and may generate at least one process factor used in the production process of the battery using the deep learning-based generative model. For example, the second process factor generation device 23 generates a new process factor ($x_{adv}$) which may involve generating a process factor with the same type as that of input data of the quality prediction model 11 but with a changed design value.

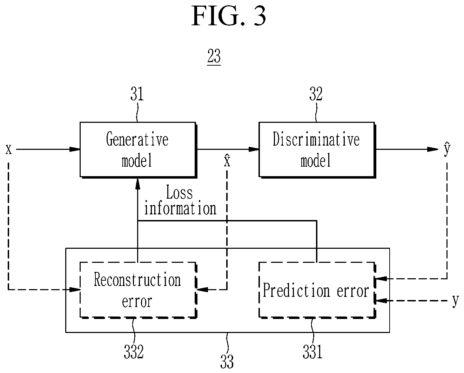

FIG. 3 schematically shows a structure of the second process factor generation device 23.

Referring to FIG. 3, the second process factor generation device 23 may include a generative model 31, a discriminative model 32, and a loss calculator 33.

The generative model 31 may be the deep learning-based generative model, and may be used as a generative model for generating the process factor if the learning is completed. The generative model 31 may receive a process factor collected in the battery production process as input data x, and may generate a new process factor from the input data x to output the generated new process factor as output data $\hat{X}$. A process factor x input to the generative model 31 may be data collected from the actual production process of the battery. A process factor $\hat{X}$ output from the generative model 31 may have the same type as that of the input data x input to the generative model 31, but may have a changed design value. For example, if the process factor x input to the generative model 31 is discharging current data with a value of C, the process factor $\hat{X}$ output from the generative model 31 may be discharging current data with a value of D.

Data $\hat{X}$ generated by the generative model 31 may be input to the discriminative model 32. The second process factor generation device 23 may obtain the quality prediction model 11 that completes learning from the quality prediction model construction device 10 to use the obtained quality prediction model as the discriminative model 32. If the process factor $\hat{X}$ generated by the generative model 31 is input, the discrimination model 32 may output predicted quality data $\hat{y}$ from the input process factor.

The loss calculator 33 may receive the quality data $\hat{y}$ output from the discriminative model 32 and the process factor $\hat{X}$ output from the generative model 31.

The loss calculator 33 may calculate a prediction error 331 by checking whether the quality data $\hat{y}$ output from the discriminative model 32 satisfy target quality data *y*. The loss calculator 33 may check similarity between the input data x and the output data $\hat{X}$ of the generative model 31 to calculate a reconstruction error 332. The loss calculator 33 may obtain loss information on the generative model 31 based on the prediction error 331 and the reconstruction error 332, and may transfer the obtained loss information to the generative model 31.

The generative model 31 receiving the loss information may perform learning based on the loss information to adjust an internal parameter or a weight of an artificial neural network model constituting the generative model 31 and generate the new process factor $\hat{X}$ based on the adjusted internal parameter or weight. The learning process may be repeatedly performed until the loss information calculated by the loss calculator 33 satisfies a predetermined condition.

If the learning of the generative model 31 is completed in the above-described manner, the second process factor generation device 23 may use the learning to generate a new process factor that has a distribution similar to that of a process factor collected in the actual battery production process and at the same time satisfies the target quality.

Referring back to FIG. 1, the determination device 24 may evaluate the process factors generated by the first process factor generation device 22 and the second process factor generation device 23 using the quality prediction model 11. The determination device 24 may select an optimal generative model among the decision boundary-based generative model and the deep learning-based generative model according to the evaluation result. The determination device 24 may input process factors generated by the decision boundary-based generative model and process factors generated by the deep learning-based generative model as input data of the quality prediction model 11, and may check whether the quality data output from the quality prediction model 11 in response to the input data of the quality prediction model 11 satisfies the target quality. The determination device 24 may calculate a ratio of process factors in which the prediction result of the quality prediction model 11 satisfies the target quality among all process factors generated for each generative model, and may determine a generative model having the higher ratio as the optimal generative model.

If the optimal generative model is determined by the determination device 24, process factors to be applied to the production process of the battery may be automatically designed and provided using the generative model.

Each of the quality prediction model construction device 10 and the process factor design device 20 may include at least one processor. At least one processor constituting the quality prediction model construction device 10 may perform the method for generating the quality prediction model described above. Each processor constituting the process factor design device 20 may perform at least one of functions performed by the first process factor generation device 22, the second process factor generation device 23, and the determination device 24.

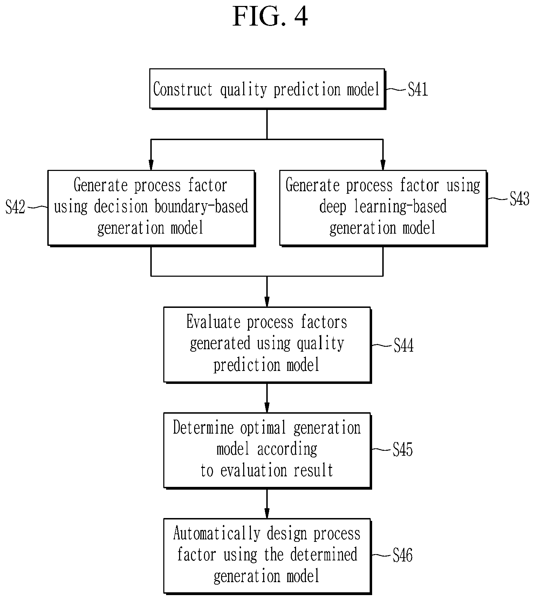

FIG. 4 schematically shows a method for designing the process factor according to some embodiments. The method of FIG. 4 may be performed by the process factor design system 1 described above with reference to FIGS. 1 to 3.

Referring to FIG. 4, the quality prediction model construction device 10 of the process factor design system 1 according to the embodiments may construct a deep learning-based quality prediction model 11 (S41). In the step S41, the quality prediction model construction device 10 may construct the quality prediction model 11 by learning the artificial neural network model using process factors and quality data collected from the actual production process of the battery.

The process factor design device 20 of the process factor design system 1 may generate a new process factor from the process factor collected in the actual production process of the battery using the decision boundary-based generative model (S42). In the step S42, the process factor design device 20 may estimate the decision boundary by performing the adversarial attack on the quality prediction model 11 generated in the step S41, and may generate the process factor that satisfies the target quality based on the estimated decision boundary.

The process factor design device 20 may generate a new process factor from the process factor collected in the actual production process of the battery using the deep learning-based generative model (S43). In the step S43, the deep learning-based generative model may be obtained through a learning process using process factors collected in the battery production process as input data of the generative model and using the quality prediction model 11 as a discriminative model for output data of the generative model. The process factor design device 20 may input the process factor collected from the actual production process of the battery to the deep learning-based generative model that completes learning, and the generative model may obtain a new process factor from output data output in response to the input process factor.

If the process factors are generated through the steps S42 and S43, the process factor design device 20 may evaluate process factors generated using the quality prediction model 11 (S44).

In the step S44, the process factor design device 20 may input process factors generated by the decision boundary-based generative model and process factors generated by the deep learning-based generative model as input data of the quality prediction model 11, and may check whether the quality data output from the quality prediction model 11 in response to the input data of the quality prediction model 11 satisfies the target quality to evaluate the process factors.

The process factor design device 20 may determine an optimal generative model among the decision boundary-based generative model and the deep learning-based generative model according to the evaluation result in the step S44 (S45).

In the step S45, the process factor design device 20 may calculate a ratio of process factors in which the prediction result of the quality prediction model 11 satisfies the target quality among all process factors generated using each of the decision boundary-based generative model and the deep learning-based generative model. The process factor design device 20 may determine the generative model with the higher calculated ratio as the optimal generative model.

If the optimal process factor generative model is selected, the process factor design device 20 may automatically design and provide process factors to be applied to the production process of the battery using the selected generative model (S46).

A case in which the step S42 of generating the process factor using the decision boundary-based generative model and the step S43 of generating the process factor using the deep learning-based generative model are performed in parallel with each other is shown as an example in FIG. 4. However, some embodiments of the present disclosure are not limited thereto, and the step S42 of generating the process factor using the decision boundary-based generative model and the step S43 of generating the process factor using the deep learning-based generative model may be sequentially performed according to a predetermined order.

Electronic or electrical devices according to embodiments of the present disclosure and/or other related devices or constituent elements may be realized by using appropriate hardware, firmware (e.g., an application-specific integrated circuit), software, or a combination of software, firmware, and hardware. For example, various constituent elements of the devices may be disposed on one integrated circuit (IC) chip or an individual IC chip. In some embodiments, various constituent elements of the devices may be realized on a flexible printed circuit film, a tape carrier package (TCP), a printed circuit board (PCB), or one substrate. The electrical or mutual connections described in the present specification may, for example, be realized by the PCB, wires on different types of circuit carriers, or conductive elements. The conductive elements may, for example, include metallization such as surface metallizations and/or pins, and may include conductive polymers or ceramics.

For example, the various constituent elements of the devices may be performed by at least one processor so as to perform the above-described various functions, they may be performed in at least one computing device, and they may be processes or threads for performing computer program instructions and interacting with other system constituent elements. The computer program instruction is stored in a memory realizable in a computing device using a standard memory device such as a random access memory (RAM). The computer program instruction may also be stored in a non-transitory computer readable medium such as a CD-ROM, a flash drive, or the like.

Further, a person of ordinary skill in the art should understand that various functions of the computing device may be combined or united to a single computing device or functions of a specific computing device may be dispersed to at least another computing device while not digressing from the range of the embodiments of the present disclosure.

## Claims

1. A system for designing a process factor, comprising:

   a first generation device configured to generate a plurality of first process factors using a first generative model (31) capable of estimating a decision boundary of a quality prediction model (11) and generating the process factor based on the estimated decision boundary;
   a second generation device configured to generate a plurality of second process factors using a deep learning-based second generative model (31); and
   a determination device (24) configured to determine a third generative model (31) among the first generative model (31) and the second generative model (31) and automatically generate at least one process factor applied to a production process using the third generative model (31),
   wherein the quality prediction model (11) is an artificial neural network model (32) that receives a process factor of the production process as input data and predicts quality data based on the input data, and
   wherein the third generative model (31) is a result of an evaluation of the plurality of first process factors and the plurality of second process factors using the quality prediction model (11).

2. The system as claimed in claim 1, further comprising
   a quality prediction model construction device (10) configured to construct the quality prediction model (11) by learning the artificial neural network model (32) using a plurality of third process factors and a plurality of quality data collected from the production process as learning data.

3. The system as claimed in any of claims 1 or 2, wherein the first generation device is further configured to estimate the decision boundary by applying an adversarial attack on the quality prediction model (11).

4. The system as claimed in any of claims 1 to 3, wherein the second generation device is further configured to use the quality prediction model (11) as a discriminative model (32) of the second generative model (31) to learn the second generative model (31).

5. The system as claimed in any of claims 1 to 4, wherein
   the determination device (24) is further configured to:

   input the plurality of first process factors and the plurality of second process factors as the input data of the quality prediction model (11);
   analyze output data output from the quality prediction model (11) to calculate a first ratio and a second ratio; and
   determine the optimal generative model (31) based on a comparison result of the first ratio and the second ratio, wherein:

   the first ratio is a ratio of process factors satisfying a target quality among the plurality of first process factors, and
   the second ratio is a ratio of process factors satisfying a target quality among the plurality of second process factors.

6. The system as claimed in any of claims 1 to 5, wherein:

   the production process is a production process of a battery;
   the at least one process factor applied to the production process is a factor representing a design condition in the production process of the battery and comprises at least one of a charging voltage, a charging capacity, a charging time, a charging cell temperature, a discharging voltage, a discharging current, a discharging capacity, a discharging cell temperature, and an electrolyte weight; and
   the quality data indicates whether a target quality for at least one quality factor indicating a quality of a battery is achieved.

7. A method for designing a process factor of a system, comprising:

   generating a plurality of first process factors using a first generative model (31) that estimates a decision boundary of a quality prediction model (11) and generates the process factor based on the estimated decision boundary;
   generating a plurality of second process factors using a deep learning-based second generative model (31);
   determining a third generative model (31) among the first generative model (31) and the second generative model (31) according to an evaluation of the plurality of first process factors and the plurality of second process factors using the quality prediction model (11); and
   automatically designing at least one process factor applied to a production process using the determined optimal generative model (31),
   wherein the quality prediction model (11) is an artificial neural network model (32) that receives the process factor applied to the production process as input data and predicts quality data based on the input data.

8. The method as claimed in claim 7, further comprising constructing the quality prediction model (11) by learning the artificial neural network model (32) using a plurality of third process factors and a plurality of quality data collected from the production process as learning data.

9. The method as claimed in any of claims 7 or 8, wherein the generating of the plurality of first process factors comprises estimating the decision boundary by applying an adversarial attack on the quality prediction model (11).

10. The method as claimed in any of claims 7 to 9, further comprising using the quality prediction model (11) as a discriminative model (32) of the second generative model (31) to learn the second generative model (31).

11. The method as claimed in any of claims 7 to 10, wherein the determining of the third generative model (31) comprises:

    inputting the plurality of first process factors and the plurality of second process factors as the input data of the quality prediction model (11);
    analyzing output data output from the quality prediction model (11) to calculate a first ratio and a second ratio; and
    determining the optimal generative model (31) based on a comparison result of the first ratio and the second ratio, wherein:

    the first ratio is a ratio of process factors satisfying a target quality among the plurality of first process factors, and
    the second ratio is a ratio of process factors satisfying a target quality among the plurality of second process factors.

12. The method as claimed in any of claims 7 to 11, wherein:

the production process is a production process of a battery;
the at least one process factor applied to the production process is a factor representing a design condition in the production process of the battery and comprises at least one of a charging voltage, a charging capacity, a charging time, a charging cell temperature, a discharging voltage, a discharging current, a discharging capacity, a discharging cell temperature, and an electrolyte weight; and
the quality data indicates whether a target quality for at least one quality factor indicating a quality of a battery is achieved.

13. The method as claimed in any of the claims 7 to 12, wherein:
the quality prediction model (11) comprises a deep learning method.

14. The method as claimed in any of the claims 7 to 13, wherein:
the process factor of the battery production process used for generating the quality prediction model (11) may be a factor indicating a design condition in the battery production process, and may include a charging voltage, a charging capacity, a charging time, a charging cell temperature, a discharging voltage, a discharging current, a discharging capacity, a discharging cell temperature, an electrolyte weight, or the like.

15. The method as claimed in any of the claims 7 to 14, wherein:
the quality data used to learn the quality prediction model (11) may be values indicating whether target quality of factors representing the quality of the battery such as an open circuit voltage (OCV), an internal resistance (IR), a cell capacity, a cell thickness, and the like are achieved.

# FIG. 1

<u>1</u>

# FIG. 2

# FIG. 3

<u>23</u>

# FIG. 4

Construct quality prediction model —S41

Generate process factor using decision boundary-based generation model —S42

Generate process factor using deep learning-based generation model —S43

Evaluate process factors generated using quality prediction model —S44

Determine optimal generation model according to evaluation result —S45

Automatically design process factor using the determined generation model —S46

| Europäisches Patentamt European Patent Office Office européen des brevets | **EUROPEAN SEARCH REPORT** | **Application Number** EP 24 21 0577 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMITZEK MATTHIAS ET AL: "Digitalization Platform for Mechanistic Modeling of Battery Cell Production", SUSTAINABILITY, vol. 2022, no. 14(3), 1530, 1 February 2022 (2022-02-01), pages 1-22, XP093170558, CH ISSN: 2071-1050, DOI: 10.3390/su14031530 Retrieved from the Internet: URL:https://www.mdpi.com/2071-1050/14/3/1530 [retrieved on 2025-05-14] * Section 2; page 4 - page 11 * ----- | 1-15 | INV. G06N3/0475 G06N20/20 |
| A | FU ZHONGWANG ET AL: "ELAA: An Ensemble-Learning-Based Adversarial Attack Targeting Image-Classification Model", ENTROPY, vol. 2023, no. 25(2), 215, 22 January 2023 (2023-01-22), XP093277136, CH ISSN: 1099-4300, DOI: 10.3390/e25020215 Retrieved from the Internet: URL:https://www.mdpi.com/1099-4300/25/2/215 [retrieved on 2025-05-14] * section 3; page 3 - page 7; figures 1,3 * ----- | 1-15 | TECHNICAL FIELDS SEARCHED (IPC) G06N G01R |

-/--

The present search report has been drawn up for all claims

| Place of search | Date of completion of the search | Examiner |
|---|---|---|
| The Hague | 20 May 2025 | Suarez Y Gonzalez, R |

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI YIHUAN ET AL: "Fast battery capacity estimation using convolutional neural networks", TRANSACTIONS OF THE INSTITUTE OF MEASUREMENT AND CONTROL., vol. 2020 5 November 2020 (2020-11-05), XP093277240, GB ISSN: 0142-3312, DOI: 10.1177/0142331220966425 Retrieved from the Internet: URL:https://eprints.whiterose.ac.uk/id/eprint/166232/8/oe%20VoR%200142331220966425.pdf [retrieved on 2025-05-14] * page 2, right-hand column, last paragraph - page 3, left-hand column, paragraph Second * * Sections CNN Overview and CNN architecture; page 3; figure 1 * | 1-15 | |

-----

TECHNICAL FIELDS
SEARCHED       (IPC)

The present search report has been drawn up for all claims

| Place of search | Date of completion of the search | Examiner |
|---|---|---|
| The Hague | 20 May 2025 | Suarez Y Gonzalez, R |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

.....................................................................................

& : member of the same patent family, corresponding
      document

EPO FORM 1503 03.82 (P04C01)